# EUROPÄISCHE PATENTSCHRIFT

(11) **EP 3 398 888 B1**
(45) Veröffentlichungstag und Bekanntmachung des Hinweises auf die Patenterteilung: **23.03.2022**
(21) Anmeldenummer: 18169204.7
(22) Anmeldetag: 25.04.2018
(51) Int. Cl.: B65H 3/04, B65H 3/54, B65H 3/34, B27M 1/08

(54) **VORRICHTUNG UND VERFAHREN ZUM VEREINZELN VON WERKSTÜCKEN**
DEVICE AND METHOD FOR SEPARATING WORKPIECES
DISPOSITIF ET PROCÉDÉ DE SÉPARATION DES PIÈCES À USINER

(30) Priorität: 26.04.2017 DE 102017207004
(43) Veröffentlichungstag der Anmeldung: 07.11.2018
(73) Patentinhaber: HOMAG GmbH, 72296 Schopfloch (DE)
(72) Erfinder: Winney, Stephen, 72250 Freudenstadt (DE); Müller, Michael, 72178 Waldachtal (DE); Steeb, Marcel, 72270 Baiersbronn-Mitteltal (DE); Thumm, Michael, 72149 Neustetten (DE)
(74) Vertreter: Hoffmann Eitle

(56) Entgegenhaltungen:
- EP-A1- 0 267 665
- DE-A1- 1 925 179
- DE-C1- 10 219 982

## Beschreibung

### Technisches Gebiet

Die Erfindung betrifft eine Vorrichtung zum Vereinzeln von Werkstücken, die bevorzugt zumindest abschnittsweise aus Holz, Holzwerkstoffen, Kunststoff oder dergleichen bestehen, nach dem Oberbegriff von Anspruch 1.

### Stand der Technik

Im Bereich der holzverarbeitenden Industrie werden Werkstücke häufig in Stapeln bereitgestellt, um anschließend einer Bearbeitungsvorrichtung zugeführt und dort bearbeitet zu werden. Als Beispiele können Paneele genannt werden, wie sie beispielsweise als Wand- oder Bodenbelag verwendet werden.

Die Werkstückstapel werden meist in einem Werkstückmagazin bereitgehalten und mittels einer Ausfördereinrichtung einzeln aus dem Werkstückmagazin herausgeschoben. Hierfür können beispielsweise Nocken bzw. Schieber zum Einsatz kommen.

Bei vergleichsweise dünnen, biegelabilen Werkstücken wie Paneelen haben sich derartige Systeme jedoch nur als bedingt leistungsfähig erwiesen. Die erreichbare Taktleistung reicht für moderne Bearbeitungsmaschinen, bei denen Paneele mit sehr hohen Bearbeitungsgeschwindigkeiten gefördert werden, in der Regel nicht aus.

Vor diesem Hintergrund wurden Systeme entwickelt, bei denen das jeweils unterste Werkstück eines Werkstückstapels mittels eines Riemens aus dem Magazin ausgefördert wird. Allerdings tritt bei diesem System die Schwierigkeit auf, dass neben dem untersten Werkstück auch das benachbarte Werkstück ausgefördert wird, sodass die gewünschte Vereinzelung nicht erreicht werden kann. Dieser Umstand führt zu einem unsicheren Ablauf.

Es ist die EP 0 267 665 A1 bekannt, die eine Vorrichtung zum Zuführen von blattartigem Material betrifft und den Oberbegriff des Anspruchs 1 offenbart.

Als weiteres Dokument ist die DE 19 25 179 A1 bekannt, die eine Vorrichtung zum Vereinzeln des untersten Zuschnitts eines Stapels in Papierverarbeitungsmaschinen zeigt.

### Darstellung der Erfindung

Vor diesem Hintergrund ist es Aufgabe der Erfindung, eine Vorrichtung zum Vereinzeln von Werkstücken der eingangs genannten Art bereitzustellen, die bei einer hohen Taktleistung eine zuverlässige Vereinzelung der Werkstücke ermöglicht.

Diese Aufgabe wird erfindungsgemäß durch eine Vorrichtung nach Anspruch 1 gelöst. Besonders bevorzugte Ausführungsformen der Erfindung sind in den abhängigen Ansprüchen angegeben.

Der Erfindung liegt der Gedanke zugrunde, das Bereithalten der Werkstücke in einem Werkstückmagazin und das Ausfördern der Werkstücke mittels einer Ausfördereinrichtung zu entkoppeln. Zu diesem Zweck weist die erfindungsgemäße Vorrichtung eine Zustelleinrichtung auf, die eingerichtet ist, mindestens ein in dem Werkstückmagazin bereitgestelltes Werkstück zu der Ausfördereinrichtung zuzustellen. Hierdurch wird es ermöglicht, auch bei hohen Ausfördergeschwindigkeiten der Ausfördereinrichtung eine zuverlässige Vereinzelung zu erzielen. Insbesondere kann der Förderbetrieb der Fördereinrichtung von den Betriebsbedingungen des Werkstückmagazins (wie beispielsweise der aktuellen Stapelhöhe) entkoppelt werden. Dies führt im Ergebnis sowohl zu einer höheren Vereinzelungsgeschwindigkeit als auch zu einer erhöhten Vereinzelungszuverlässigkeit.

Die Zustelleinrichtung kann im Rahmen der Erfindung auf vielfältige Art und Weise ausgestaltet sein. Gemäß einer Weiterbildung der Erfindung ist jedoch vorgesehen, dass die Zustelleinrichtung erste Zustellelemente aufweist, die zumindest abschnittsweise im Bereich von Rändern des Magazinbereichs angeordnet sind. Hierdurch wird bei einfacher Konstruktion eine stabile Zustellung und gegebenenfalls auch Abstützung der in dem Magazinbereich vorgesehenen Werkstücke ermöglicht.

Gemäß der Erfindung ist es vorgesehen, dass die Zustelleinrichtung mindestens ein zweites Zustellelemente aufweist, das zumindest abschnittsweise beabstandet von Rändern des Magazinbereichs angeordnet ist. Hierdurch wird insbesondere bei biegelabilen Werkstücken (wie beispielsweise Paneelen) eine unerwünschte Durchbiegung der Werkstücke, die zu einem vorzeitigen oder unerwünschten Ausfördern von Werkstücken führen könnte, verhindert. Dieser Effekt ist besonders ausgeprägt, wenn das mindestens eine zweite Zustellelement zwischen ersten Zustellelementen angeordnet ist.

Es ist bevorzugt, dass die ersten Zustellelemente und das mindestens eine zweites Zustellelement mechanisch miteinander verbunden oder einstückig ausgebildet sind. Auf diese Weise ist es möglich, eine gemeinsame Ausstellbewegung durchzuführen. Insbesondere können die Zustellelemente mittels einer gemeinsamen Basis verbunden sein.

Alternativ ist es gemäß einer weiteren Variante vorgesehen, dass die ersten Zustellelemente und das mindestens eine zweite Zustellelement elektronisch miteinander verbunden sind (beispielsweise über eine gemeinsame Steuereinrichtung), und insbesondere separat voneinander bewegbar sind. Es ist jedoch bevorzugt, dass die Bewegungen der Zustellelemente miteinander synchronisiert sind.

Es ist bevorzugt, dass die ersten Zustellelemente und das zweite Zustellelement gleichzeitig bewegt werden. Alternativ ist es beispielsweise denkbar, zunächst die ersten Zustellelemente zu bewegen, und auf diese Weise das oder die Werkstücke leicht anzuheben. Weggesteuert oder kraftgesteuert wird nachfolgend eine Bewegung des mindestens einen zweiten Zustellelements durchgeführt.

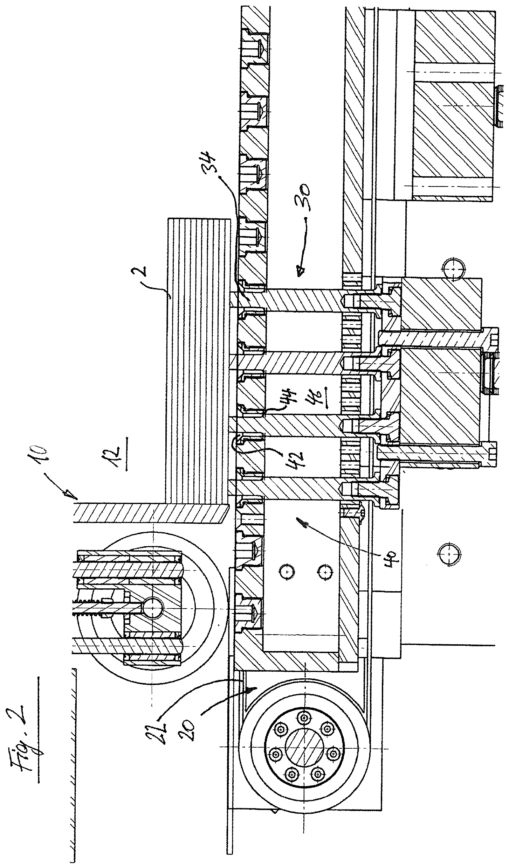

Das zweite Zustellelement ist bolzenförmig (siehe beispielsweise Fig. 2), beispielsweise als, sich insbesondere vertikal erstreckender, Aushubbolzen, ausgebildet.

Die Ausfördereinrichtung weist gemäß einer bevorzugten Ausführungsform der Erfindung mindestens ein Ausförderelement zum Ausfördern eines Werkstücks aus dem Werkstückmagazin auf, das bevorzugt ein umlaufendes Endlosfördermittel besitzt. Hierdurch lässt sich bei einfacher Konstruktion und geringem Verschleiß eine hohe Vereinzelungsgeschwindigkeit erzielen. Alternativ oder zusätzlich kann die Ausfördereinrichtung auch ein taktweise arbeitendes Ausförderelement wie beispielsweise einen Schieber aufweisen.

Ferner ist es bevorzugt, wenn die Ausfördereinrichtung zwei Ausförderelemente (bevorzugt umlaufende Endlosfördermittel) aufweist, wobei besonders bevorzugt ist, dass das zweite Zustellelement (in einer Draufsicht betrachtet) zwischen den Ausförderelementen angeordnet ist. Somit kann eine kompakte Vorrichtung bereitgestellt werden, bei der zusätzlich ein Anhebepunkt oder einen Anhebebereich zwischen den Ausförderelementen vorgesehen ist.

Es ist bevorzugt, dass die zwei Ausförderelemente mittels eines gemeinsamen Antriebs antreibbar sind. Auf diese Weise wird eine synchrone Ausförderbewegung bereitgestellt.

Ferner weist die erfindungsgemäße Vorrichtung gemäß einer Weiterbildung der Erfindung eine Ansaugeinrichtung zum Ansaugen eines auszufördernden Werkstücks an die Ausfördereinrichtung auf. Durch diese Maßnahme lassen sich nochmals höhere Ausförder- und Vereinzelungsgeschwindigkeiten erreichen, da eine deutlich bessere Kraftübertragung zwischen Ausfördereinrichtung und Werkstück ermöglicht wird.

Eine besonders vorteilhafte Kombination der Erfindung liegt vor, wenn bei Einsatz einer Ansaugeinrichtung auch ein zweites Zustellelement vorgesehen wird. Denn insbesondere bei biegelabilen Werkstücken kann der Einsatz einer Ansaugeinrichtung unter Umständen zu einer erhöhten Durchbiegung der Werkstücke führen, was einen vorzeitigen oder unerwünschten Kontakt zwischen Ausfördereinrichtung und Werkstück verursachen könnte. Neben anderen Maßnahmen ist es in diesem Falle besonders effektiv, mindestens ein zweites Zustellelement wie oben beschrieben vorzusehen. Bei dieser Kombination ergibt sich eine ausgesprochen hohe Vereinzelungsgeschwindigkeit bei dennoch sehr hoher Vereinzelungszuverlässigkeit.

Die Ansaugeinrichtung weist gemäß einer Weiterbildung der Erfindung mindestens eine Ansaugöffnung auf, die im Bereich der Ausfördereinrichtung mündet. Hierdurch ergibt sich eine besonders effiziente Ansaugung der Werkstücke an die Ausfördereinrichtung. Dabei sind unterschiedlichste Ausgestaltungen möglich. So kann mindestens eine Ansaugöffnung auch derart vorgesehen sein, dass sie beispielsweise durch ein Ausförderelement der Ausfördereinrichtung hindurch auf das Werkstück wirkt, wobei das Ausförderelement zu diesem Zweck entsprechend ausgestaltet (beispielsweise mit Durchgangsöffnungen versehen) sein kann.

Gemäß einer Weiterbildung der Erfindung ist ferner vorgesehen, dass die Ansaugeinrichtung eine Unterdruckleitung mit einer Schließeinrichtung aufweist, mittels der die Unterdruckversorgung in der Unterdruckleitung zumindest teilweise unterbrochen werden kann. Hierdurch wird ermöglicht, den Unterdruckbetrieb der Ansaugeinrichtung besonders präzise zu steuern und gleichzeitig erhebliche Mengen an Energie einzusparen. Beispielsweise kann durch die Schließeinrichtung die Unterdruckversorgung unterbrochen werden, wenn gerade kein Werkstück mittels der Ausfördereinrichtung ausgefördert bzw. vereinzelt werden soll.

Dabei ist es besonders bevorzugt, dass die Schließeinrichtung mit der Zustelleinrichtung synchronisiert ist. Hierdurch lässt sich bei zuverlässiger Betriebsweise der erforderliche Energieeinsatz minimieren. Dabei ist es besonders bevorzugt, dass die Schließeinrichtung durch die Zustelleinrichtung betätigt ist. Hierdurch lassen sich sowohl Konstruktion als auch Steuerung der erfindungsgemäßen Vorrichtung erheblich vereinfachen.

Die erfindungsgemäße Vereinzelungsvorrichtung eignet sich besonders für den Einsatz in einer Bearbeitungsmaschine zum Bearbeiten von Werkstücken, die bevorzugt zumindest abschnittsweise aus Holz, Holzwerkstoffen, Kunststoff oder dergleichen bestehen, wie in Anspruch 12 definiert.

Ferner betrifft die Erfindung ein Verfahren zum Vereinzeln von Werkstücken, unter Einsatz der zuvor genannten Vorrichtung oder der zuvor genannten Bearbeitungsmaschine. Die Werkstücke sind bevorzugt zumindest abschnittsweise aus Holz, Holzwerkstoffen, Kunststoff oder dergleichen. Insbesondere handelt es sich bei den Werkstücken um Paneele, die beispielsweise zur Verkleidung von Böden oder Wänden verwendet werden.

Das Verfahren umfasst die Schritte: Bereithalten einer Mehrzahl von Werkstücken, insbesondere eines Stapels von Werkstücken, in einem Magazinbereich eines Werkstückmagazin, Zustellen mindestens eines in dem Werkstückmagazin bereitgehaltenen Werkstücks zu einer Ausfördereinrichtung, Ausfördern des mindestens einen Werkstücks. Dem Bereithalten kann ein Schritt vorausgehen, bei dem Werkstücke gestapelt werden.

Nachfolgend werden weitere bevorzugte Ausführungsformen beschrieben. Bezüglich der Vorteile wird auf die obigen Ausführungen verwiesen.

Es ist bevorzugt, dass beim Zustellen ein erstes und/oder zweites Zustellelement abgesenkt wird/werden. Im Falle eines ersten und zweiten Zustellelements kann die Bewegung gemeinsam, beispielsweise synchron erfolgen.

Gemäß einer bevorzugten Variante ist es vorgesehen, dass das Werkstück, bevorzugt das unterste Werkstück eines Werkstückstapels, angesaugt wird, wobei das Werkstück ferner mit einem oder mehreren Ausförderelementen in Kontakt gebracht wird.

Sobald die Reibungskraft die Kraftreibung zwischen dem untersten Werkstück und dem unmittelbar darüber liegenden Werkstück überschreitet, wird das unterste Werkstück 2 ausgefördert. Anschließend wird/werden das erste und/oder zweite Zustellelement wieder in die Ausgangsstellung gefahren, sodass ein neuer Vereinzelungsvorgang gestartet werden kann.

Es ist bevorzugt, dass das Zustellen mit einer Zustelleinrichtung durchgeführt wird, welche Zustelleinrichtung erste Zustellelemente aufweist, die zumindest abschnittsweise im Bereich von Rändern des Magazinbereichs angeordnet sind.

Gemäß der Erfindung ist es vorgesehen, dass die Zustelleinrichtung mindestens ein zweites Zustellelement aufweist, das zumindest abschnittsweise beabstandet von Rändern des Magazinbereichs angeordnet ist, insbesondere zwischen ersten Zustellelementen.

Es ist bevorzugt, dass die ersten Zustellelemente und das zweite Zustellelement gemeinsam oder separat verfahrbar sind. Insbesondere sind ersten Zustellelemente und das zweite Zustellelement mechanisch und/oder elektronisch miteinander verbunden. Beispielsweise können die ersten Zustellelemente und das zweite Zustellelement mechanisch miteinander verbunden oder einstückig ausgebildet sein. Auf diese Weise ist es möglich, eine gemeinsame Ausstellbewegung durchzuführen. Insbesondere können die Zustellelemente mittels einer gemeinsamen Basis verbunden sein.

Alternativ ist es gemäß einer weiteren Variante vorgesehen, dass die ersten Zustellelemente und das mindestens eine zweite Zustellelement elektronisch miteinander verbunden sind (beispielsweise über eine gemeinsame Steuereinrichtung), und insbesondere separat voneinander bewegbar sind. Es ist jedoch bevorzugt, dass die Bewegungen der Zustellelemente miteinander synchronisiert sind.

Es ist bevorzugt, dass die ersten Zustellelemente und das zweite Zustellelement gleichzeitig bewegt werden. Alternativ ist es beispielsweise denkbar, zunächst die ersten Zustellelemente zu bewegen, und auf diese Weise das oder die Werkstücke leicht anzuheben. Weggesteuert oder kraftgesteuert wird nachfolgend eine Bewegung des mindestens einen zweiten Zustellelements durchgeführt.

Gemäß der Erfindung ist es vorgesehen, dass das zweite Zustellelement zumindest abschnittsweise bolzenförmig ausgebildet ist.

In einer Modifikation wird im Rahmen des Verfahrens eine Ausfördereinrichtung eingesetzt, bei der mindestens ein Ausförderelement zum Ausfördern eines Werkstücks aus dem Werkstückmagazin aufweist, das bevorzugt ein umlaufendes Endlosfördermittel besitzt.

Besonders bevorzugt ist dabei, dass die Ausfördereinrichtung zwei Ausförderelemente, insbesondere umlaufende Endlosfördermittel, aufweist, wobei bevorzugt ist, dass das zweite Zustellelement der Zustelleinrichtung zwischen den Ausförderelementen angeordnet ist.

Die eingesetzte Vorrichtung kann eine Ansaugeinrichtung zum Ansaugen eines auszufördernden Werkstücks an die Ausfördereinrichtung aufweisen, wobei ferner bevorzugt ist, dass die Ansaugeinrichtung mindestens eine Ansaugöffnung aufweist, die im Bereich der Ausfördereinrichtung mündet. Die Ansaugeinrichtung kann eine Unterdruckleitung mit einer Schließeinrichtung aufweisen, mittels der die Unterdruckversorgung in der Unterdruckleitung zumindest teilweise unterbrochen werden kann.

Es ist bevorzugt, dass die Schließeinrichtung mit der Zustelleinrichtung synchronisiert, bevorzugt durch die Zustelleinrichtung betätigt ist.

### Kurze Beschreibung der Zeichnungen

Fig. 1 zeigt schematisch eine frontale Schnittansicht einer Ausführungsform der der erfindungsgemäßen Vorrichtung;
Fig. 2 zeigt schematisch eine seitliche Schnittansicht der in Fig. 1 gezeigten Vorrichtung in einem ersten Betriebszustand;
Fig. 3 zeigt schematisch eine seitliche Schnittansicht der der in Fig. 1 gezeigten Vorrichtung in einem zweiten Betriebszustand.

### Ausführliche Beschreibung bevorzugter Ausführungsformen

Bevorzugte Ausführungsformen der Erfindung werden nachfolgend unter Bezugnahme auf die begleitenden Zeichnungen beschrieben.

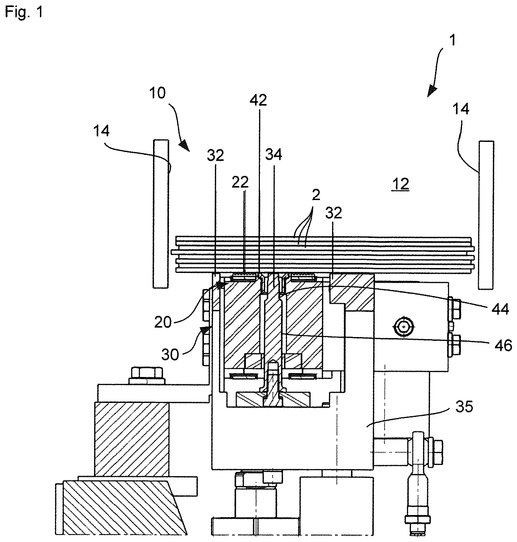

Eine Vorrichtung 1 zum Vereinzeln von Werkstücken gemäß einer bevorzugten Ausführungsform der Erfindung ist in den Figuren 1 bis 3 schematisch in verschiedenen Schnittansichten dargestellt. Die Vorrichtung 1 dient zum Vereinzeln von Werkstücken 2, die beispielsweise aus Holz, Holzwerkstoffen, Kunststoff oder dergleichen bestehen können. Die Vorrichtung 1 eignet sich besonders für vergleichsweise biegsame Werkstücke, wie insbesondere Paneele zur Verkleidung von Böden oder Wänden. Es können jedoch prinzipiell beliebige Werkstücke vereinzelt werden.

Obgleich in den Figuren nicht gezeigt, kann die Vereinzelungsvorrichtung 1 vorteilhaft Teil einer Bearbeitungsmaschine zum Bearbeiten der Werkstücke sein, die eine Bearbeitungseinheit wie beispielsweise eine Fräseinheit, Bohreinheit, Sägeeinheit oder vielfältige andere Bearbeitungseinheiten aufweist.

Die Vereinzelungsvorrichtung 1 weist zunächst ein Werkstückmagazin 10 auf, in dessen Magazinbereich 12 ein Stapel von Werkstücken 2 angeordnet ist. Unterhalb des Werkstückstapels ist eine Ausfördereinrichtung 20 zum Ausfördern des jeweils unteren Werkstücks 2 aus dem Werkstückmagazin 10 vorgesehen. Die Ausfördereinrichtung 20 weist in der vorliegenden Ausführungsform zwei Förderriemen 22 auf (vgl. Fig. 1 und Fig. 2).

Ferner besitzt die Vereinzelungsvorrichtung 1 eine Zustelleinrichtung 30, die dazu dient, das jeweils auszufördernde Werkstück 2 von dem Werkstückmagazin 10 zu der Ausfördereinrichtung 20 zuzustellen bzw. dem verbleibenden Werkstückstapel von der Ausfördereinrichtung 20 getrennt zu halten. Zu diesem Zweck besitzt die Zustelleinrichtung 30 zunächst erste Zustellelemente 32. Wie in Fig. 1 zu erkennen ist, sind die ersten Zustellelemente 32 im Bereich von Rändern 14 des Magazinbereichs 12 angeordnet, sodass sie die Ränder der jeweiligen Werkstücke 2 abstützen. In der in Fig. 1 gezeigten Ausführungsform sind die Ränder des Magazinbereichs 12 durch Wände gebildet. An den Rändern 14 des Magazinbereichs 12 muss jedoch keine körperliche Begrenzung vorgesehen sein.

Zusätzlich weist die Zustelleinrichtung 30 in der vorliegenden Ausführungsform zweite Zustellelemente in Form von Aushubbolzen 34 auf, die sich zwischen den ersten Zustellelementen 32 befinden.

Die ersten und die zweiten Zustellelemente sind in einer Zustellrichtung, die sich zwischen dem Werkstückmagazin 10 und der Ausfördereinrichtung 20 erstreckt, (insbesondere vertikal) verfahrbar, um die Zustell- und Aushubbewegung der jeweiligen Werkstücke ausführen zu können.

In der dargestellten Ausführungsform sind die ersten Zustellelemente 32, die leistenförmig sind, und die mehreren zweiten Zustellelemente über eine gemeinsame Basis 35 der Zustelleinrichtung 30 miteinander in Verbindung. Die Basis 35 ist, im Querschnitt betrachtet (Fig. 1), u-förmig ausgestaltet. Ein Antrieb (nicht dargestellt) führt zu einer Bewegung der Basis 35, und somit zu einer Verstellung der Zustellelemente 32, 34.

Im Bereich der Ausfördereinrichtung 20 weist die Vereinzelungsvorrichtung 1 in der vorliegenden Ausführungsform ferner eine Ansaugeinrichtung 40 zum Ansaugen des jeweils auszufördernden Werkstücks 2 an die Ausfördereinrichtung 20 auf. In der vorliegenden Ausführungsform besitzt die Ansaugeinrichtung 40 mehrere Ansaugöffnungen 42, die jeweils im Bereich der zweiten Zustellelemente 34 angeordnet sind. Zu den Ansaugöffnungen 43 führt eine Unterdruckleitung 46. Um die Zuführung von Unterdruck bzw. Vakuum zu den Ansaugöffnungen 42 zumindest teilweise oder zeitweise unterbrechen zu können, ist ferner eine Schließeinrichtung 44 vorgesehen, die in der vorliegenden Ausführungsform durch eine umlaufende Schulter an den Aushubelementen 34 gebildet ist. Auf diese Weise ergibt sich eine synchronisierte Betätigung von Schließeinrichtung 44 und Zustelleinrichtung 30.

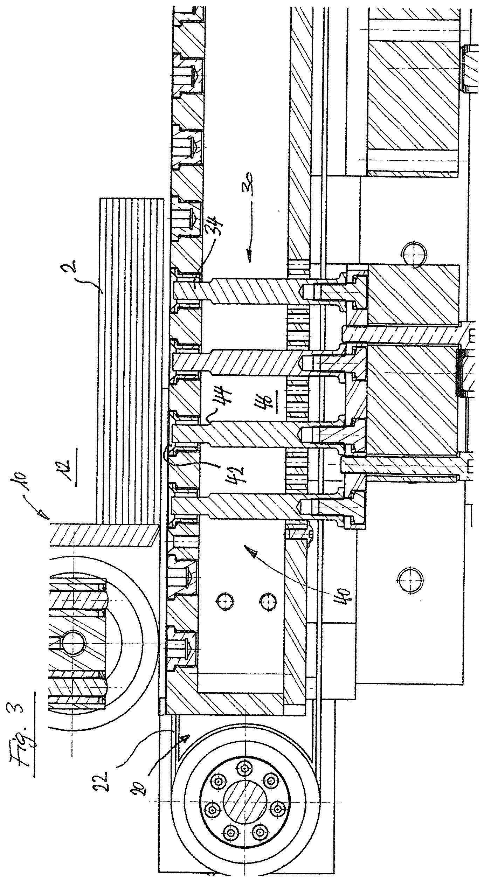

Der Betrieb der Vereinzelungsvorrichtung 1 vollzieht sich unter Bezugnahme auf die Figuren 2 und 3 beispielsweise wie folgt. In der in Fig. 2 schematisch dargestellten Ausgangsstellung sind die ersten und zweiten Zustellelemente 32 und 34 der Zustelleinrichtung 30 ausgefahren, sodass die Werkstücke 2 des Werkstückstapels in dem Werkstückmagazin 10 von der Ausfördereinrichtung 20 beabstandet sind. Ferner ist die Unterdruckzufuhr zu den Ansaugöffnungen 42 durch die Schließeinrichtung 44 in diesem Zustand zumindest teilweise unterbrochen. Die Ausfördereinrichtung 20 wird sich in diesem Zustand bereits in einem kontinuierlichen Förderbetrieb befinden, obgleich die Ausfördereinrichtung 20 bei Bedarf oder bei längeren Arbeitsunterbrechungen auch angehalten werden kann.

Sobald ein Werkstück 2 vereinzelt werden soll, werden die ersten und zweiten Zustellelemente 32 und 34 der Zustelleinrichtung 30 gezielt abgesenkt. Hierdurch werden die Ansaugöffnungen 42 mit dem Unterdruck in der Unterdruckleitung 46 in Strömungsverbindung gebracht, sodass das unterste Werkstück 2 des Werkstückstapels an die Ausfördereinrichtung 20 angesaugt wird. Im Zuge der Absenkung der ersten und zweiten Zustellelemente 32 und 34 und das unterste Werkstück 2 mit den Förderriemen 22 der Ausfördereinrichtung 20 in Kontakt, und es baut sich eine immer größere Reibungskraft auf, die durch die Ansaugkraft der Ansaugeinrichtung 40 verstärkt wird.

Sobald die Reibungskraft die Kraftreibung zwischen dem untersten Werkstück 2 und dem unmittelbar darüber liegenden Werkstück 2 überschreitet, wird das unterste Werkstück 2 ausgefördert, wie in Fig. 3 zu erkennen ist. Unmittelbar anschließend werden die ersten und zweiten Zustellelemente 32 und 34 wieder in die Ausgangsstellung gemäß Fig. 2 gefahren, sodass ein neuer Vereinzelungsvorgang gestartet werden kann.

## Patentansprüche

1. Vorrichtung (1) zum Vereinzeln von Werkstücken (2), die bevorzugt zumindest abschnittsweise aus Holz, Holzwerkstoffen, Kunststoff oder dergleichen bestehen, umfassend:
ein Werkstückmagazin (10) mit einem Magazinbereich (12) zum Bereithalten einer Mehrzahl von Werkstücken (2), insbesondere eines Stapels von Werkstücken,
eine Ausfördereinrichtung (20) zum Ausfördern eines Werkstücks (2) aus dem Werkstückmagazin (10),
wobei die Vorrichtung eine Zustelleinrichtung (30) aufweist, die eingerichtet ist, mindestens ein in dem Werkstückmagazin (10) bereitgehaltenes Werkstück (2) zu der Ausfördereinrichtung (20) zuzustellen,
die Zustelleinrichtung (30) mindestens ein zweites Zustellelement (34) aufweist, das zumindest abschnittsweise beabstandet von Rändern (14) des Magazinbereichs (12) angeordnet ist,
**dadurch gekennzeichnet, dass** das zweite Zustellelement (34) zumindest abschnittsweise bolzenförmig ausgebildet ist.

2. Vorrichtung nach Anspruch 1, **dadurch gekennzeichnet, dass** die Zustelleinrichtung (30) erste Zustellelemente (32) aufweist, die zumindest abschnittsweise im Bereich von Rändern (14) des Magazinbereichs (12) angeordnet sind.

3. Vorrichtung nach Anspruch 1 oder 2, **dadurch gekennzeichnet, dass** das zweite Zustellelement (34) zwischen ersten Zustellelementen (32) angeordnet ist.

4. Vorrichtung nach Anspruch 2 und 3, **dadurch gekennzeichnet, dass** die ersten Zustellelemente (32) und das zweite Zustellelement (34) mechanisch und/oder elektronisch miteinander verbunden sind.

5. Vorrichtung nach einem der vorhergehenden Ansprüche, **dadurch gekennzeichnet, dass** die Ausfördereinrichtung (20) mindestens ein Ausförderelement (22) zum Ausfördern eines Werkstücks (2) aus dem Werkstückmagazin (10) aufweist, das bevorzugt ein umlaufendes Endlosfördermittel (22) besitzt.

6. Vorrichtung nach Anspruch 5, **dadurch gekennzeichnet, dass** die Ausfördereinrichtung (20) zwei Ausförderelemente (22), insbesondere umlaufende Endlosfördermittel (22), aufweist, wobei bevorzugt ist, dass das zweite Zustellelement (34) der Zustelleinrichtung (30) zwischen den Ausförderelementen (22) angeordnet ist.

7. Vorrichtung nach einem der vorhergehenden Ansprüche, **dadurch gekennzeichnet, dass** sie eine Ansaugeinrichtung (40) zum Ansaugen eines auszufördernden Werkstücks (2) an die Ausfördereinrichtung (20) aufweist.

8. Vorrichtung nach Anspruch 7, **dadurch gekennzeichnet, dass** die Ansaugeinrichtung (40) mindestens eine Ansaugöffnung (42) aufweist, die im Bereich der Ausfördereinrichtung (20) mündet.

9. Vorrichtung nach Anspruch 7 oder 8, **dadurch gekennzeichnet, dass** die Ansaugeinrichtung (40) eine Unterdruckleitung (46) mit einer Schließeinrichtung (44) aufweist, mittels der die Unterdruckversorgung in der Unterdruckleitung (46) zumindest teilweise unterbrochen werden kann.

10. Vorrichtung nach Anspruch 9, **dadurch gekennzeichnet, dass** die Schließeinrichtung (44) mit der Zustelleinrichtung (30) synchronisiert, bevorzugt durch die Zustelleinrichtung (30) betätigt ist.

11. Bearbeitungsmaschine zum Bearbeiten von Werkstücken, die bevorzugt zumindest abschnittsweise aus Holz, Holzwerkstoffen, Kunststoff oder dergleichen bestehen, umfassend:
eine Vereinzelungsvorrichtung (1) nach einem der vorhergehenden Ansprüche,
eine Bearbeitungseinheit zum Durchführen der Werkstückbearbeitung.

12. Verfahren zum Vereinzeln von Werkstücken (2), unter Einsatz der Vorrichtung gemäß einem der Ansprüche 1-10 oder der Bearbeitungsmaschine gemäß Anspruch 11, welche Werkstücke (2) bevorzugt zumindest abschnittsweise aus Holz, Holzwerkstoffen, Kunststoff oder dergleichen bestehen, umfassend die Schritte:
Bereithalten einer Mehrzahl von Werkstücken (2), insbesondere eines Stapels von Werkstücken, in einem Magazinbereich (12) eines Werkstückmagazins (10),
Zustellen mindestens eines in dem Werkstückmagazin (10) bereitgehaltenen Werkstücks (2) zu einer Ausfördereinrichtung (20),
Ausfördern des mindestens einen Werkstücks (2) .

13. Verfahren gemäß Anspruch 12, **dadurch gekennzeichnet, dass** beim Zustellen ein erstes und/oder zweites Zustellelement (32, 34) zumindest teilweise abgesenkt wird.

14. Verfahren gemäß Anspruch 12 oder 13, **dadurch gekennzeichnet, dass** das Werkstück, bevorzugt das unterste Werkstück (2) eines Werkstückstapels, angesaugt wird, wobei bevorzugt ist, dass das Werkstück (2) ferner mit einem oder mehreren Ausförderelementen (22) in Kontakt gebracht wird.

## Claims

1. Device (1) for separating workpieces (2) that preferably consist at least in portions of wood, wood-based materials, plastics material or the like, comprising:
a workpiece magazine (10) having a magazine region (12) for holding ready a plurality of workpieces (2), in particular a stack of workpieces, a dispensing mechanism (20) for dispensing a workpiece (2) from the workpiece magazine (10), wherein
the device comprises a feed mechanism (30), which is designed to feed at least one workpiece (2) held ready in the workpiece magazine (10) to the dispensing mechanism (20), the feed mechanism (30) comprising at least one second feed element (34), which is arranged at a distance from edges (14) of the magazine region (12) at least in portions,
**characterised in that**
the second feed element (34) is bolt-shaped at least in portions.

2. Device according to claim 1, **characterised in that** the feed mechanism (30) comprises first feed elements (32), which are arranged at least in portions in the region of the edges (14) of the magazine region (12).

3. Device according to claim 1 or 2, **characterised in that** the second feed element (34) is arranged between the first feed elements (32).

4. Device according to claim 2 and 3, **characterised in that** the first feed elements (32) and the second feed elements (34) are mechanically and/or electronically connected to one another.

5. Device according to any of the preceding claims, **characterised in that** the dispensing mechanism (20) comprises at least one dispensing element (22) for dispensing a workpiece (2) from the workpiece magazine (10), which dispensing element preferably has a circumferential endless conveying means (22).

6. Device according to claim 5, **characterised in that** the dispensing mechanism (20) comprises two dispensing elements (22), in particular endless conveying means (22), wherein the second feed element (34) of the feed mechanism (30) is preferably arranged between the dispensing elements (22) .

7. Device according to any of the preceding claims, **characterised in that** it comprises a suction mechanism (40) for sucking a workpiece (2) to be dispensed to the dispensing mechanism (20).

8. Device according to claim 7, **characterised in that** the suction mechanism (40) comprises at least one suction opening (42) that opens out in the region of the dispensing mechanism (20).

9. Device according to claim 7 or 8, **characterised in that** the suction mechanism (40) comprises a vacuum line (46) comprising a closing mechanism (44), by means of which the vacuum supply in the vacuum line (46) can be interrupted at least in part.

10. Device according to claim 9, **characterised in that** the closing mechanism (44) is synchronised with the feed mechanism (30), and is preferably actuated by means of the feed mechanism (30).

11. Machine tool for machining workpieces that preferably consist at least in portions of wood, wood-based materials, plastics material or the like, comprising:
a separating device (1) according to any of the preceding claims,
a machining unit for machining the workpieces.

12. Method for separating workpieces (2), using the device according to any of claims 1-10 or the machine tool according to claim 11, which workpieces (2) preferably consist at least in portions of wood, wood-based materials, plastics material or the like, comprising the steps of:
holding ready a plurality of workpieces (2), in particular a stack of workpieces, in a magazine region (12) of a workpiece magazine (10),
feeding at least one workpiece (2) held ready in the workpiece magazine (10) to a dispensing mechanism (20),
dispensing the at least one workpiece (2).

13. Method according to claim 12, **characterised in that** a first and/or second feed element (32, 34) is lowered at least in part during feeding.

14. Method according to claim 12 or 13, **characterised in that** the workpiece, preferably the lowest workpiece (2) of a workpiece stack, is sucked up, wherein the workpiece (2) is preferably also brought into contact with one or more dispensing elements (22).

## Revendications

1. Dispositif (1) de séparation de pièces à usiner (2) qui se composent de préférence au moins par sections de bois, de matériaux dérivés du bois, de matière plastique ou similaires, comprenant :
un magasin de pièce à usiner (10) avec une zone de magasin (12) pour la mise à disposition d'une pluralité de pièces à usiner (2), en particulier d'une pile de pièces à usiner,
un appareil d'extraction (20) pour l'extraction d'une pièce à usiner (2) hors du magasin de pièces à usiner (10),
dans lequel le dispositif présente un appareil d'avance (30) qui est conçu afin d'avancer au moins une pièce à usiner (2) mise à disposition dans le magasin de pièce à usiner (10) jusqu'à l'appareil d'extraction (20), l'appareil d'avance (30) présente au moins un second élément d'avance (34) qui est agencé au moins par sections à distance de bords (14) de la zone de magasin (12),
**caractérisé en ce que**
le second élément d'avance (34) est réalisé au moins par sections en forme de boulon.

2. Dispositif selon la revendication 1, **caractérisé en ce que** l'appareil d'avance (30) présente des premiers éléments d'avance (32) qui sont agencés au moins par sections dans la zone de bords (14) de la zone de magasin (12).

3. Dispositif selon la revendication 1 ou 2, **caractérisé en ce que** le second élément d'avance (34) est agencé entre des premiers éléments d'avance (32).

4. Dispositif selon les revendications 2 et 3, **caractérisé en ce que** les premiers éléments d'avance (32) et le second élément d'avance (34) sont reliés entre eux mécaniquement et/ou électroniquement.

5. Dispositif selon l'une quelconque des revendications précédentes, **caractérisé en ce que** l'appareil d'extraction (20) présente au moins un élément d'extraction (22) pour l'extraction d'une pièce à usiner (2) hors du magasin de pièce à usiner (10) qui possède de préférence un moyen de transport sans fin périphérique (22).

6. Dispositif selon la revendication 5, **caractérisé en ce que** l'appareil d'extraction (20) présente deux éléments d'extraction (22), en particulier des moyens de transport sans fin périphériques (22), dans lequel il est préféré que le second élément d'avance (34) de l'appareil d'avance (30) soit agencé entre les éléments d'extraction (22).

7. Dispositif selon l'une quelconque des revendications précédentes, **caractérisé en ce qu'**il présente un appareil d'aspiration (40) pour l'aspiration d'une pièce à usiner (2) à extraire au niveau de l'appareil d'extraction (20).

8. Dispositif selon la revendication 7, **caractérisé en ce que** l'appareil d'aspiration (40) présente au moins une ouverture d'aspiration (42) qui débouche dans la zone de l'appareil d'extraction (20).

9. Dispositif selon la revendication 7 ou 8, **caractérisé en ce que** l'appareil d'aspiration (40) présente une conduite de dépression (46) avec un appareil de fermeture (44), au moyen duquel l'alimentation en dépression peut être interrompue au moins partiellement dans la conduite de dépression (46).

10. Dispositif selon la revendication 9, **caractérisé en ce que** le dispositif de fermeture (44) est synchronisé avec l'appareil d'avance (30), de préférence actionné par l'appareil d'avance (30).

11. Machine d'usinage pour l'usinage de pièces à usiner qui se compose de préférence au moins par sections de bois, de matériaux dérivés du bois, de matière plastique ou similaires, comprenant :
un dispositif de séparation (1) selon l'une quelconque des revendications précédentes,
une unité d'usinage pour la réalisation de l'usinage de pièce à usiner.

12. Procédé de séparation de pièces à usiner (2), en utilisant le dispositif selon l'une quelconque des revendications 1-10 ou la machine d'usinage selon la revendication 11, lesquelles pièces à usiner (2) se composent de préférence au moins par sections de bois, de matériaux dérivés du bois, de matière plastique ou similaires, comprenant les étapes consistant à :
la mise à disposition d'une pluralité de pièces à usiner (2), en particulier d'une pile de pièces à usiner, dans une zone de magasin (12) d'un magasin de pièces à usiner (10),
l'avance au moins d'une pièce à usiner (2) mise à disposition dans le magasin de pièce à usiner (10) jusqu'à un appareil d'extraction (20),
l'extraction d'au moins une pièce à usiner (2).

13. Procédé selon la revendication 12, **caractérisé en ce que** lors de l'avance un premier et/ou second élément d'avance (32, 34) est abaissé au moins partiellement.

14. Procédé selon la revendication 12 ou 13, **caractérisé en ce que** la pièce à usiner, de préférence la pièce à usiner la plus basse (2) d'une pile de pièce à usiner, est aspirée, dans lequel il est préféré que la pièce à usiner (2) soit de plus amenée en contact avec un ou plusieurs éléments d'extraction (22).
